(19) 

**Europäisches Patentamt**
**European Patent Office**
**Office européen des brevets**

(11) **EP 3 932 969 A1**

(12) **EUROPÄISCHE PATENTANMELDUNG**

(43) Veröffentlichungstag:
**05.01.2022 Patentblatt 2022/01**

(51) Int Cl.:
**C08G 18/76** *(2006.01)*  **C08G 18/48** *(2006.01)*
**C08G 18/16** *(2006.01)*  **C08K 5/315** *(2006.01)*
**C08L 75/08** *(2006.01)*  **C08K 5/25** *(2006.01)*

(21) Anmeldenummer: **21176797.5**

(22) Anmeldetag: **31.05.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **02.07.2020 EP 20183581**

(71) Anmelder: **Covestro Deutschland AG**
**51373 Leverkusen (DE)**

(72) Erfinder:
• **Albach, Rolf**
  **51061 Köln (DE)**
• **Kastner, Katharina**
  **40597 Duesseldorf (DE)**
• **Faerber, Veronica-Alina**
  **51467 Bergisch Gladbach (DE)**
• **Schlecht, Sebastian**
  **40721 Hilden (DE)**

(74) Vertreter: **Levpat**
**c/o Covestro AG**
**Gebäude K12**
**51365 Leverkusen (DE)**

(54) **VERFAHREN ZUR REDUKTION VON EMISSIONEN VON POLYURETHANEN**

(57) Die vorliegende Erfindung betrifft ein Verfahren zur Herstellung von Polyurethanen, bevorzugt Polyurethanschaumstoffen, wobei die Komponente

**A** enthaltend

**A1** Verbindungen mit gegenüber Isocyanaten reaktionsfähigen Wasserstoffatomen,

**A2** mindestens eine der Komponenten **A2.1** oder **A2.2,** wobei

**A2.1** eine oder mehrere C-H-acide Verbindungen der Formel (Ia) enthält

$$Z^2\text{-C(O)-NH-OH} \qquad \text{(Ia)}$$

wobei
$Z^2$ für $-CH_2-NO_2$, $-CH_2-CN$, $-CH_2-P(O)R^2R^3$, $-CH_2-S(O)R^4R^5$, $-CH_2-C(O)-OR^6$, $-CH_2-C(O)-NR^7R^8$, $-CH_2-NR^9-NR^{10}R^{11}$, $-CH_2-NR^{12}-OR^{13}$, $-CH_2-C(Y)R^{14}$ oder einer substituierten Arylgruppe steht,
$Y$ für $=O$ oder $=NOR^{15}$ steht,
$R^2$ bis $R^7$ und $R^9$ bis $R^{15}$ jeweils unabhängig voneinander für H, eine substituierte oder unsubstituierte Alkylgruppe oder eine substituierte oder unsubstituierte Arylgruppe steht,
$R^8$ für H, eine substituierte oder unsubstituierte Alkylgruppe oder eine substituierte oder unsubstituierte Arylgruppe oder eine Hydroxylgruppe steht,

**A2.2** ein oder mehrere Anthranilamide gemäß Formel (II) und/oder (III) enthält,

$$H_2N\text{-Aryl-C(O)-NH-}R^a\text{-XH} \qquad \text{(II)}$$

$$H_2N\text{-Aryl-C(O)-NH-}R^b\text{-X-C(O)-Aryl-NH}_2 \qquad \text{(III)}$$

wobei $R^a$ und $R^b$ unabhängig voneinander für eine substituierte oder unsubstituierte Alkylkette, wie ein (Poly)alkylenoxid, stehen,
$X$ für $-O-$, $-N(H)-$ oder $-S-$ steht,

gegebenenfalls
**A3** Treibmittel

EP 3 932 969 A1

und gegebenenfalls
**A4** Hilfs- und Zusatzstoffe wie
a) Katalysatoren,
b) oberflächenaktive Zusatzstoffe,
c) Pigmente und/oder Flammschutzmittel,

mit
**B** Di- und/oder Polyisocyanaten,
umgesetzt wird.

Weiter betrifft die vorliegende Erfindung die aus diesem Verfahren erhältlichen Polyurethane, sowie den Einsatz solcher Polyurethane beispielsweise im Innenraum von Automobilen.

**Beschreibung**

Die vorliegende Erfindung betrifft ein Verfahren zur Herstellung von Polyurethanen unter Verwendung von emissionsreduzierenden Verbindungen, die erhaltenen Polyurethane selber, die Verwendung der emissionsreduzierenden Verbindungen, sowie eine Mischung enthaltend diese Verbindungen.

Es ist bekannt, dass in Polyurethanen durch Folgereaktionen die unerwünschte Bildung und Emission von Formaldehyd und Acetaldehyd stattfindet. Beide Verbindungen sind als bedenklich für die Gesundheit eingestuft. Für die zulässigen Emissionen gibt es deshalb standardisierte Messmethoden wie zum Beispiel die vom Verband der Automobilindustrie entwickelten Methoden VDA 275 und VDA 278. Zusätzlich gibt es Grenzwerte verschiedenster Organisationen für die Emission dieser Verbindungen, welche über die Zeit immer weiter abgesenkt wurden. Es ist deshalb notwendig Additive zu finden, die zu einer Reduktion der Emissionen von Formaldehyd und Acetaldehyd führen. Ein verbreiteter Weg hierzu ist die Nutzung der Knoevenagel-Reaktion durch C-H-acide Verbindungen im Polymer.

Beispiele für solche Verbindungen im Stand der Technik sind Cyanacethydrazid (WO 2018/114820 A1), Malonsäuredihydrazid (WO 2017/207687 A1) und insbesondere Cyanacetamid (EP 2 138 520 A1, WO 2015/082316 A1 und WO 2017/134296 A1). In WO 2017/134296 A1 ist offenbart, dass Cyanacetamid zusätzlich zur Emission von Formaldehyd auch die Emission von Acetaldehyd verringert.

Es ist aber gleichzeitig notwendig, dass die Maßnahmen zur Absenkung der Aldehydemissionen nicht zu einer gegenteiligen Entwicklung der Gesamtemissionen führen.

Die Aufgabenstellung ist somit die Bereitstellung von Additiven zur Herstellung von Polyurethanen mit guten mechanischen Eigenschaften, die die Emission von Formaldehyd, Acetaldehyd, Acrolein und möglichst auch Propionaldehyd reduzieren und gleichzeitig dazu geeignet sind, einen Beitrag zur Verringerung der Gesamtemission zu leisten.

Gegenstand der vorliegenden Erfindung ist ein Verfahren zur Herstellung von Polyurethanen, bevorzugt Polyurethanschaumstoffen, wobei die Komponente

**A** enthaltend

**A1** Verbindungen mit gegenüber Isocyanaten reaktionsfähigen Wasserstoffatomen,
**A2** mindestens eine der Komponenten **A2.1** oder **A2.2,** wobei

**A2.1** eine oder mehrere C-H-acide Verbindungen der Formel (Ia) enthält

$$Z^2\text{-C(O)-NH-OH} \qquad \text{(Ia)}$$

wobei

$Z^2$ für -CH$_2$-NO$_2$, -CH$_2$-CN, -CH$_2$-P(O)R$^2$R$^3$, -CH$_2$-S(O)R$^4$R$^5$, -CH$_2$-C(O)-OR$^6$, -CH$_2$-C(O)-NR$^7$R$^8$, CH$_2$-NR$^9$-NR$^{10}$R$^{11}$, -CH$_2$-NR$^{12}$-OR$^{13}$, -CH$_2$-C(Y)R$^{14}$ oder einer substituierten Arylgruppe, bevorzugt mit einem NCO-reaktiven Substituenten, steht, Y für =O oder =NOR$^{15}$ steht,
R$^2$ bis R$^7$ und R$^9$ bis R$^{15}$ jeweils unabhängig voneinander für H, eine substituierte oder unsubstituierte Alkylgruppe oder eine substituierte oder unsubstituierte Arylgruppe steht,
R$^8$ für H, eine substituierte oder unsubstituierte Alkylgruppe oder eine substituierte oder unsubstituierte Arylgruppe oder eine Hydroxylgruppe steht,

**A2.2** ein oder mehrere Anthranilamide gemäß Formel (II) und/oder (III) enthält,

$$H_2N\text{-Aryl-C(O)-NH-R}^a\text{-XH} \qquad \text{(II)}$$

$$H_2N\text{-Aryl-C(O)-NH-R}^b\text{-X-C(O)-Aryl-NH}_2 \qquad \text{(III)}$$

wobei R$^a$ und R$^b$ unabhängig voneinander für eine substituierte oder unsubstituierte Alkylkette, wie ein (Poly)alkylenoxid, stehen,
X für -O-, -N(H)- oder -S- steht,

gegebenenfalls
**A3** Treibmittel
und gegebenenfalls
**A4** Hilfs- und Zusatzstoffe wie

a) Katalysatoren,
b) oberflächenaktive Zusatzstoffe,
c) Pigmente und/oder Flammschutzmittel,

mit
**B** Di- und/oder Polyisocyanaten,
umgesetzt wird.

Gegenstand der vorliegenden Erfindung sind auch die nach dem beschriebenen Verfahren erhältlichen Polyurethane, bevorzugt Polyurethanschaumstoffe.

Es wurde gefunden, dass sowohl Verbindungen gemäß der Formel (Ia) (Komponente A2.1), herstellbar aus Hydroxylamin und/oder Hydroxylaminsalzen mit einer oder mehreren Verbindungen gemäß der Formel (I) als auch Anthranilamide der Formel (II) und (III) (Komponente A2.2) überraschenderweise als sehr gute Aldehydfänger wirken und gleichzeitig die Emission von leichtflüchtigen und kondensierbaren Substanzen (VOC und FOG) stärker reduzieren als die bisher bekannten Additive.

Ein weiterer Gegenstand der Erfindung ist daher die Verwendung einer oder mehrerer Verbindungen gemäß der Formel (Ia), herstellbar aus Hydroxylamin und/oder Hydroxylaminsalzen mit einer oder mehreren Verbindungen gemäß der Formel (I), und/oder ein oder mehrere Anthranilamide der Formel (II) oder (III) in Polyurethanzusammensetzungen oder in Verfahren zur Herstellung von Polyurethanen, bevorzugt Polyurethanschaumstoffen, zur Erniedrigung der Aldehydemissionen und/oder der Emission leichtflüchtiger und kondensierbarer Verbindungen der daraus resultierenden Polyurethane, bevorzugt Polyurethanschaumstoffe. Weiterhin ist die Mischung enthaltend Verbindungen mit gegenüber Isocyanaten reaktionsfähigen Wasserstoffatomen und einer oder mehreren Verbindungen gemäß der Formel (Ia), herstellbar aus Hydroxylamin und/oder Hydroxylaminsalzen mit einer oder mehreren Verbindungen gemäß der Formel (I) und/oder ein oder mehrere Anthranilamide der Formel (II) und/oder (III) Gegenstand der Erfindung.

## Komponente A1

Als Verbindungen mit gegenüber Isocyanat reaktionsfähigen Wasserstoffatomen können beispielsweise Polyole ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt werden. Bevorzugt sind Polyesterpolyole und/oder Polyetherpolyole. Die Verbindungen der Komponente **A1** können eine Amin- und/oder Hydroxylzahl zwischen 15 bis 4000 mg KOH/g und eine Funktionalität von 1 bis 8 aufweisen. Vorzugsweise weisen die Verbindungen der Komponente **A1** ein zahlenmittleres Molekulargewicht von 2000 g/mol bis 15000 g/mol, insbesondere 3000 g/mol bis 12000 g/mol und besonders bevorzugt 3500 g/mol bis 6500 g/mol auf. Werden mehr als nur eine Verbindung der Komponente **A1** verwendet, kann die Mischung aus Verbindungen der Komponente **A1** bevorzugt eine Hydroxylzahl zwischen 20 bis 200 mg KOH/g, insbesondere 25 bis 100 mg KOH/g aufweisen.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z. B. Di-, Tri- oder sogar Tetracarbonsäuren oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Milchsäure, Äpfelsäure, Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Copolymere des Propylenoxids mit Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mindestens 3 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Als Verbindungen mit gegenüber Isocyanaten reaktionsfähigen Wasserstoffatomen können auch Polymerpolyole, PHD-Polyole und PIPA-Polyole in Komponente **A1** eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyhydrazodicarbonamid)-Polyole werden beispielsweise hergestellt durch in situ Polymerisation eines Isocyanats oder einer Isocyanat-Mischung mit einem Diamin und/oder Hydrazin (bzw. Hydrazinhydrat) in einem Polyol, bevorzugt einem Polyetherpolyol. Bevorzugt wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazinhydrat in einem Polyetherpolyol hergestellt durch Alkoxylierung eines trifunktionellen Starters (wie beispielsweise Glycerin und/oder Trimethylolpropan). Bei PIPA-Polyolen handelt es sich um durch Polyisocyanat-Polyaddition mit Alkanolaminen-modifizierte Polyetherpolyole, wobei das Polyetherpolyol bevorzugt eine Funktionalität von 2,5 bis 4,0 und eine Hydroxylzahl von 3 mg KOH/g bis 112 mg KOH/g (Molekulargewicht 500 g/mol bis 18000 g/mol) aufweist.

Isocyanat-reaktive Substanzen mit zellöffnender Wirkung können Copolymere aus Ethylenoxid und Propylenoxid mit einem Überschuss an Ethylenoxid oder aromatischen Diamine wie Diethyltoluendiamin sein.

Neben den oben beschriebenen Isocyanat-reaktiven Verbindungen können in der Komponente **A1** beispielsweise Graft-Polyole, Polyamine, Polyaminoalkohole und Polythiole enthalten sein. Die beschriebenen Isocyanat-reaktiven Komponenten umfassen auch solche Verbindungen mit gemischten Funktionalitäten.

Für die Herstellung von Polyurethanschaumstoffen im Kaltschaumverfahren werden bevorzugt mindestens zwei Hydroxylgruppen aufweisenden Polypropylenoxid-Polyethylenoxid-BlockCopolymere mit einer OH-Zahl von 20 bis 50 mg KOH/g eingesetzt, wobei die OH-Gruppen zu mindestens 80 Mol-% aus primärem OH-Gruppen bestehen (Bestimmung mittels $^1$H-NMR (z.B. Bruker DPX 400, Deuterochloroform)). Besonders bevorzugt beträgt die OH-Zahl 25 bis 40 mg KOH/g, ganz besonders bevorzugt 25 bis 35 mg KOH/g.

Gegebenenfalls werden zusätzlich in der Komponente **A1** Verbindungen mit mindestens zwei gegenüber Isocyanaten reaktionsfähigen Wasserstoffatomen und einer OH-Zahl von 280 bis 4000 mg KOH/g, bevorzugt 400 bis 3000 mg KOH/g, besonders bevorzugt 1000 bis 2000 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin, Triethanolamin, Sorbit und/oder Glycerin eingesetzt werden.

Die Komponente **A1** kann aus einer oder mehreren der oben genannten Isocyanat-reaktiven Komponenten bestehen, bevorzugt enthält die Komponente **A1** mindestens zwei Hydroxylgruppen aufweisenden Polyether, gegebenenfalls in Mischung mit mindestens zwei Hydroxylgruppen aufweisenden Polyestern.

In einer bevorzugten Ausführungsform enthält die Komponente **A1**:

**A1.1** gegenüber Isocyanaten reaktionsfähige Wasserstoffatome aufweisende Verbindungen mit einer NH-Zahl gemäß DIN 53176 in der Fassung von November 2002 und/oder OH-Zahl gemäß DIN 53240-1 in der Fassung von Juni 2013 von 15 bis < 120 mg KOH/g, gegebenenfalls

**A1.2** gegenüber Isocyanaten reaktionsfähige Wasserstoffatome aufweisende Verbindungen mit einer NH-Zahl gemäß DIN 53176 in der Fassung von November 2002 und/oder OH-Zahl gemäß DIN 53240-1 in der Fassung von Juni 2013 von 120 bis 600 mg KOH/g, und gegebenenfalls

**A1.3** gegenüber Isocyanaten reaktionsfähigen Wasserstoffatomen aufweisenden Verbindungen mit einer NH-Zahl gemäß DIN 53176 in der Fassung von November 2002 und/oder OH-Zahl gemäß DIN 53240-1 in der Fassung von Juni 2013 von 600 bis 4000 mg KOH/g.

In einer weiteren bevorzugten Ausführungsform enthält die Komponente A mindestens 30 Gew.-%, bezogen auf das Gesamtgewicht der Komponente **A1**, mindestens eines Polyoxyalkylen-Copolymers, bestehend aus einem Starter, Propylenoxid und Ethylenoxid und einem Endblock aus Ethylenoxid, wobei das Gesamtgewicht der Endblöcke aus Ethylenoxid im Mittel 3 - 20 Gew.-%, bevorzugt 5-15 Gew.-%, besonders bevorzugt 6 - 10 Gew.-% bezogen auf das gesamte Gewicht aller Polyoxyalkylen-Copolymere beträgt.

**Komponente A2**

Erfindungsgemäß enthält die Komponente **A2** mindestens eine Verbindung **A2.1** oder **A2.2.** Bevorzugt wird die Komponente **A2** in einem Anteil von 1 bis 200 mmol pro kg der Komponenten **A** und **B**, besonders bevorzugt von 5 bis 50 mmol pro kg der Komponenten **A** und **B**, eingesetzt.

Als **A2.1** werden eine oder mehrere C-H-acide Verbindungen eingesetzt, die herstellbar sind durch Reaktion von Hydroxylamin und/oder einem Hydroxylaminsalz mit einer oder mehreren Verbindungen gemäß der Formel

$$Z^1\text{-}C(O)\text{-}R^1 \qquad (I)$$

wobei

$Z^1$ für $-CH_2\text{-}NO_2$, $-CH_2\text{-}CN$, $-CH_2\text{-}P(O)R^2R^3$, $-CH_2\text{-}S(O)R^4R^5$, $-CH_2\text{-}C(O)\text{-}OR^6$, $-CH_2\text{-}C(O)\text{-}NR^7R^8$, $-CH_2\text{-}NR^9\text{-}NR^{10}R^{11}$, $-CH_2\text{-}NR^{12}\text{-}OR^{13}$, $-CH_2\text{-}C(O)R^{14}$ oder einer substituierten Arylgruppe steht,
$R^1$ bis $R^7$ und $R^9$ bis $R^{14}$ jeweils unabhängig voneinander für H, eine substituierte oder unsubstituierte Alkylgruppe oder eine substituierte oder unsubstituierte Arylgruppe steht,
$R^8$ für H, eine substituierte oder unsubstituierte Alkylgruppe oder eine substituierte oder unsubstituierte Arylgruppe oder eine Hydroxylgruppe steht.

Die C-H-acide Verbindungen gemäß **A2.1** weisen eine Struktur gemäß Formel (Ia) auf:

$$Z^2\text{-}C(O)\text{-}NH\text{-}OH \qquad (Ia)$$

wobei

$Z^2$ für $-CH_2\text{-}NO_2$, $-CH_2\text{-}CN$, $-CH_2\text{-}P(O)R^2R^3$, $-CH_2\text{-}S(O)R^4R^5$, $-CH_2\text{-}C(O)\text{-}OR^6$, $-CH_2\text{-}C(O)\text{-}NR^7R^8$, $-CH_2\text{-}NR^9\text{-}NR^{10}R^{11}$, $-CH_2\text{-}NR^{12}\text{-}OR^{13}$, $-CH_2\text{-}C(Y)R^{14}$ oder einer substituierten Arylgruppe, bevorzugt mit einem NCO-reaktiven Substituenten, steht,
$Y$ für $=O$ oder $=NOR^{15}$ steht,
$R^2$ bis $R^7$ und $R^9$ bis $R^{15}$ jeweils unabhängig voneinander für H, eine substituierte oder unsubstituierte Alkylgruppe oder eine substituierte oder unsubstituierte Arylgruppe steht,
$R^8$ für H, eine substituierte oder unsubstituierte Alkylgruppe oder eine substituierte oder unsubstituierte Arylgruppe oder eine Hydroxylgruppe steht.

Als Verbindung gemäß der Formel (I) können beispielsweise $H_3C\text{-}O\text{-}C(O)\text{-}CH_2\text{-}C(O)\text{-}O\text{-}CH_3$, $H_3C\text{-}C(O)\text{-}CH_2\text{-}C(O)\text{-}O\text{-}CH_3$, $H_3C\text{-}C(O)\text{-}CH_2\text{-}C(O)\text{-}CH_3$ oder Ester aus Polyetherpolyolen und Acetessigester eingesetzt werden. Bevorzugt ist bei Verbindungen gemäß der Formel (I) $Z^1$ entweder $-CH_2\text{-}CN$ oder $-CH_2\text{-}C(O)\text{-}OR^6$. In der Formel (I) stehen $R^1$ bis $R^{14}$ bevorzugt für H, $-O\text{-}R^{16}$, $-NR^{17}R^{18}$, $-NR^{19}\text{-}NR^{20}R^{21}$ oder eine unsubstituierte Alkylgruppe, wobei

$R^{16}$ bis $R^{21}$ für unsubstituierte $C_1$-$C_8$-Alkylgruppen stehen.

Verbindungen die beispielsweise als Komponente **A2.1** eingesetzt werden können sind $N^1$, $N^3$-Dihydroxypropandiamid, 2,4-Pentandion-2,4-dioxim, N-hydroxy-3-(hydroxyimino)-butanamid, 3-Arylamino- und 3-Alkyl-5(4$H$)-isoxazolone, 3,5-Isoxazolidindion, 2-Cyano-$N$-hydroxyacetamid und seine Ammonium- und Alkalisalze, sowie Salicylhydroxamsäure und seine Ammonium- und Alkalisalze. Bevorzugt steht $Z^2$ in Formel (Ia) für -$CH_2$-CN, -$CH_2$-C(Y)$R^{14}$ oder einer mit OH-substituierten Arylgruppe, besonders bevorzugt für -$CH_2$-C(NOR$^{15}$)$R^{14}$ oder einer mit OH-substituierten Arylgruppe. Die substituierte Arylgruppe von $Z^2$ ist vorzugsweise eine Arylgruppe mit fünf oder sechs Kohlenstoffatomen. $R^2$ bis $R^7$ und $R^9$ bis $R^{15}$ stehen in Formel (Ia) bevorzugt für H, -O-$R^{16}$, -NR$^{17}$R$^{18}$, -NR$^{19}$-NR$^{20}$R$^{21}$ oder eine unsubstituierte Alkylgruppe, wobei $R^{16}$ bis $R^{21}$ für unsubstituierte $C_1$-$C_8$-Alkylgruppen stehen. $R^8$ steht bevorzugt für H oder eine substituierte oder unsubstituierte Alkylgruppe oder eine Hydroxygruppe.

**A2.2** enthält erfindungsgemäß mindestens ein Anthranilamid gemäß Formel (II) oder (III)

$$H_2N\text{-Aryl-C(O)-NH-R}^a\text{-XH} \qquad (II)$$

$$H_2N\text{-Aryl-C(O)-NH-R}^b\text{-X-C(O)-Aryl-NH}_2 \qquad (III)$$

wobei $R^a$ und $R^b$ unabhängig voneinander für eine substituierte oder unsubstituierte Alkylkette, wie ein (Poly)alkylenoxid, stehen,

X für -O-, -N(H)- oder -S- steht,

$H_2N$-Aryl-C(O)- für einen von Anthranilsäure abgeleiteten Rest steht, eingesetzt.

**Komponente A3**

Als Komponente **A3** werden Treibmittel wie chemische und/oder physikalische Treibmittel eingesetzt.

Als chemisches Treibmittel **A3.1** werden beispielsweise Wasser oder Carbonsäuren und deren Gemische verwendet. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

Als physikalisches Treibmittel **A3.2** eingesetzt werden beispielsweise niedrig siedende organische Verbindungen wie z. B. Kohlenwasserstoffe, Ether, Ketone, Carbonsäureester, Kohlensäureester, halogenierte Kohlenwasserstoffe. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele derartiger, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluonnethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

In einer besonderen Ausführungsform enthält die Komponente **A3**

**A3.1** 0,5 bis 5 Gew.-Teile (bezogen auf **A** = 100 Gew.-Teile) chemische Treibmittel und/oder

**A3.2** 0 bis 15 Gew.-Teile (bezogen auf **A** = 100 Gew.-Teile) physikalische Treibmittel

Besonders bevorzugt wird als Komponente **A3** Wasser eingesetzt.

**Komponente A4**

Als Komponente **A4** werden Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesondere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe), insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt (i) Harnstoff, Derivate des Harnstoffs und/oder (ii) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin)-Harnstoff, 1,1'-((3-(dimethylamino)propyl)imino)bis-2-propanol, N-[2-[2-(dimethylamino)ethoxy]ethyl]-N-methyl-1,3-propanediamin und 3-Dimethylaminopropylamin.

**Komponente B**

Als Komponente **B** werden aliphatische, cycloaliphatische, araliphatische, aromatische und heterocyclische Polyisocyanate eingesetzt, beispielsweise solche der Formel (II)

$$Q(NCO)_n \qquad (II)$$

in der

n für eine ganze Zahl zwischen 2-4, vorzugsweise 2 oder 3 steht,
und

Q für einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen steht.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente **B** mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Ganz besonders bevorzugt wird als Komponente **B** eine Diphenylmethandiisocyanat-Mischung eingesetzt, bestehend aus

a) 45 bis 90 Gew.-% 4,4'-Diphenylmethandiisocyanat und

b) 10 bis 55 Gew.-% 2,2'-Diphenylmethandiisocyanat und/oder 2,4'-Diphenylmethandiisocyanat und

c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer alternativen ganz besonders bevorzugten Ausführungsform wird als Komponente **B** eine Diphenylmethandiisocyanat-Mischung eingesetzt, bestehend aus

a) 35 bis 45 Gew.-% 4,4'-Diphenylmethandiisocyanat und

b) 1 bis 5 Gew.-% 2,2'-Diphenylmethandiisocyanat und/oder 2,4'-Diphenylmethandiisocyanat und

c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

Die erfindungsgemäß erhaltenen Polyurethane sind bevorzugt Polyurethanschaumstoffe, besonders bevorzugt Polyurethanweichschaumstoffe oder Polyurethanhalbhartschaumstoffe. Zur Herstellung der Polyurethanschaumstoffe werden die Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient.

Die Polyurethanschaumstoffe können als Form- oder auch als Blockschaumstoffe hergestellt werden, wobei die Formschaumstoffe heiß- oder auch kalthärtend hergestellt werden können.

Gegenstand der Erfindung sind daher ein Verfahren zur Herstellung der Polyurethanschaumstoffe, die nach diesem Verfahren hergestellten Polyurethanschaumstoffe und deren Verwendung zur Herstellung von Formteilen oder Blockware, sowie die Formteile bzw. die Blockware selbst.

Die nach der Erfindung erhältlichen Polyurethanschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen, und können Kennzahlen von 60 bis 250, bevorzugt 70 bis 120, besonders bevorzugt 75 bis 120 und Rohdichte von 4 bis 600 kg/m$^3$, bevorzugt 60 bis 120 kg/m$^3$ (Weichschaum) bzw. bevorzugt 15 bis 55 kg/m$^3$ (Halbhartschaum) aufweisen.

Unter der Isocyanat-Kennzahl (auch Kennzahl oder Isocyanat-Index genannt) wird der Quotient aus der tatsächlich eingesetzten Stoffmenge [Mol] an Isocyanatgruppen und der tatsächlich eingesetzten Stoffmenge [Mol] an Isocyanat-reaktiven Gruppen, multipliziert mit 100, verstanden:

$$\text{Kennzahl} = (\text{Mole Isocyanatgruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

In einer bevorzugten Ausführungsform der Erfindung betrifft die Erfindung ein Verfahren zur Herstellung von Polyurethanen, bevorzugt Polyurethanschaumstoffen, wobei die Komponente

**A** enthaltend

**A1** Verbindungen mit gegenüber Isocyanaten reaktionsfähigen Wasserstoffatomen enthaltend

**A1.1** 29,0 bis 99,0 Gew.-Teile (bezogen auf A = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 20 bis < 120 mg KOH/g,

**A1.2** 0 bis 60 Gew.-Teile (bezogen auf **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 120 bis < 600 mg KOH/g,

**A1.3** 0 bis 10 Gew.-Teile (bezogen auf **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 600 bis 4000 mg KOH/g,

**A2** 1 bis 200 mmol pro kg der Komponenten **A** und **B**, bevorzugt 5 bis 50 mmol pro kg der Komponenten **A** und **B** mindestens einer Komponente **A2.1** oder **A2.2**, wobei

**A2.1** eine oder mehrere C-H-acide Verbindungen der Formel (Ia) enthält

10

$$Z^2\text{-C(O)-NH-OH} \qquad (Ia)$$

wobei

$Z^2$ für -CH$_2$-NO$_2$, -CH$_2$-CN, -CH$_2$-P(O)R$^2$R$^3$, -CH$_2$-S(O)R$^4$R$^5$, -CH$_2$-C(O)-OR$^6$, -CH$_2$-C(O)-NR$^7$R$^8$, -CH$_2$-NR$^9$-NR$^{10}$R$^{11}$, -CH$_2$-NR$^{12}$-OR$^{13}$ oder -CH$_2$-C(Y)R$^{14}$ steht,
Y für =O oder =NOR$^{15}$ steht,
R$^2$ bis R$^7$ und R$^9$ bis R$^{15}$ jeweils unabhängig voneinander für H, eine substituierte oder unsubstituierte Alkylgruppe oder eine substituierte oder unsubstituierte Arylgruppe steht,
R$^8$ für H, eine substituierte oder unsubstituierte Alkylgruppe oder eine substituierte oder unsubstituierte Arylgruppe oder eine Hydroxylgruppe steht,

**A2.2** ein oder mehrere Anthranilamide gemäß Formel (II) oder (III) enthält,

$$H_2N\text{-Aryl-C(O)-NH-R}^a\text{-XH} \qquad (II)$$

$$H_2N\text{-Aryl-C(O)-NH-R}^b\text{-X-C(O)-Aryl-NH}_2 \qquad (III)$$

wobei R$^a$ und R$^b$ unabhängig voneinander für eine substituierte oder unsubstituierte Alkylkette, wie ein (Poly)alkylenoxid, stehen,
X für -O-, -N(H)- oder -S- steht,

**A3** Treibmittel, enthaltend

**A3.1** 0,5 bis 5 Gew.-Teile (bezogen auf A = 100 Gew.-Teile) chemische Treibmittel wie Wasser und/oder
**A3.2** 0 bis 15 Gew.-Teile (bezogen auf **A** = 100 Gew.-Teile) physikalische Treibmittel wie z. B. CO$_2$,

und
**A4** 0,5 bis 10 Gew.-Teile (bezogen auf **A** = 100 Gew.-Teile) Hilfs- und Zusatzstoffe wie

a) Katalysatoren,
b) oberflächenaktive Zusatzstoffe,
c) Pigmente und/oder Flammschutzmittel,

mit
**B** Di- und/oder Polyisocyanaten mit einem Gehalt von >65 Gew.-% difunktionellen Isocyanaten, umgesetzt wird.

**Beispiele**

Prüfmethoden:

Die Druckfestigkeit und Dämpfung der Schaumstoffe wurden in Anlehnung an DIN EN ISO 3386-1 in der Fassung von September 2010 in Aufschäumrichtung bestimmt und die Rohdichte gemäß DIN EN ISO 845 in der Fassung von Oktober 2009. Die Probenkörper hatten ein Volumen von 5x5x5 cm$^3$. Eine Vorkraft von 2 N wurde dabei eingestellt. Die Vorschubgeschwindigkeit betrug 50 mm/min.

Die Hydroxylzahl wurde gemäß DIN 53240-1 in der Fassung von Juni 2013 und die Luftdurchlässigkeit gemäß DIN EN ISO 7231 in der Fassung von Dezember 2010 bestimmt.

Der Druckverformungsrest (DVR) wurde gemäß DIN EN ISO 1856 in der Fassung von Januar 2008 mit 75% Druckverformung bei 70°C für 22h gemessen (Verfahren A).

Die Werte für die Zugfestigkeit und Bruchdehnung wurden bei 22°C und 48% relativer Luftfeuchte gemäß DIN EN ISO 1798 in der Fassung von April 2008 ermittelt.

Die Bestimmung der Aldehyd-Emissionen wurde in Anlehnung an die Technische Regel VDA 275 folgendermaßen durchgeführt:
In eine Glasflasche von einem Liter Volumen werden 25 Milliliter Wasser und 25 Milliliter einer Lösung von 0,3 mmol/Liter Dinitrophenylhydrazin (DNPH) in 3 mM phosphorsaurem Acetonitril gegeben. Der Gehalt an DNPH beträgt 7,5 $\mu$mol pro Flasche. Am Deckel wird eine Schaumstoffplatte der Größe 40x10x4 cm$^3$ frei hängend befestigt so dass der Schaumstoff nicht mit der wässrigen Lösung am Boden der Flasche in Kontakt ist. Die Flasche wird verschlossen und 3 Stunden in einen Umlufttrockenschrank bei 65 °C gelagert. Die Flasche wird auf Raumtemperatur abgekühlt, der Schaumstoff entnommen und die Zusammensetzung der wässrigen Lösung per LC-MS/MS auf die Hydrazone der unten angegebenen Aldehyde analysiert. Zu jeder Schaumqualität werden drei Flaschen untersucht. Bei jedem Versuchslauf werden drei Flaschen ohne Schaumstoff mit untersucht. Der mittlere Blindwert wird von den Messwerten abgezogen. Auf dieser Basis wird auf die Emission der jeweiligen Aldehyde pro Kilogramm Schaumstoff zurückgerechnet. Die Angabe erfolgt in mg Aldehyd pro kg Schaumstoff.

Die Messung der VOC- und FOG-Werte erfolgte gemäß der Technischen Regel VDA 278 des Verbandes der Automobilindustrie "Thermodesorptionsanalyse organischer Emissionen zur Charakterisierung von nichtmetallischen Kfz-Werkstoffen" in der Fassung von Oktober 2011.

**Beschreibung der Versuche**

Rohstoffe

A1.1-1: Polyalkylenoxid gestartet auf Propylenglycol und Glyzerin in einem molaren Verhältnis von 1:1 mit einer OH-Zahl von 32 mg KOH/g und einem Gehalt an Ethylenoxid von im Mittel 16 Gew.-%

A1.1-2: Als Zellöffner genutztes Glyzerin-gestartetes Polyalkylenoxid mit einer OH-Zahl von 37 mg KOH/g und einem Gehalt an Ethylenoxid von $\geq$ 50 Gew.-%

A1.3-1: Triethanolamin

A2.1-4: Salicylhydroxamsäure (Fa. Sigma-Aldrich)

A3.1-1: Wasser

A4-1: Schaumstabilisator Tegostab® B8734 LF2 (Handelsprodukt der Firma Evonik Nutrition & Care)

A4-2: Katalysator-Mischung aus Jeffcat® DPA (Handelsprodukt der Firma Huntsman) und Dabco® NE 300 (Handelsprodukt der Firma Air Products) im Verhältnis 6:1 (nach Gewicht)

B-1: Gemisch aus MDI-Isomeren und Homologen mit einer Dichte von 1,24 kg/l, einem Isocyanat-Gehalt von 323 g/kg und einer Viskosität von 54 mPas. Es besteht zu 55 Gew.-% aus 4,4'-MDI, 12,5 Gew.-% 2,4'-MDI, 1,5 Gew.-% aus 2,2'-MDI. Der Rest wird von höheren Homologen des MDI gebildet.

V-1: Cyanacethydrazid

V-2: Cyanacetamid

Herstellung von A2.1-1

69,60 g Acetessigsäuremethylester (0,6 mol) werden in 0,4 dm$^3$ Methanol vorgelegt. 88,8 g Hydroxylaminlösung (50 Gew.-% in Wasser, 1,34 mol) werden zugetropft. Nach 95 Stunden Reaktionszeit wird das Lösungsmittel bei 40°C und 11 mbar Vakuum entfernt.

Es wird eine Verbindung mit der Struktur H$_3$C-C(NOH)-CH$_2$-CO-NH-OH erhalten.

Herstellung von A2.1-2

79,3 g Dimethylmalonat (0,6 mol) werden mit 0,4 dm$^3$ Methanol verdünnt. 88,8 g Hydroxylaminlösung (50 Gew.-% in Wasser, 1,34 mol) werden zugetropft und die Mischung wird 85 h gerührt. Es werden 0,4 dm$^3$ Ethanol zugegeben. Dabei fällt ein weißer Feststoff aus. Nach Absaugen und Trocknen werden 72,6 g Ausbeute erhalten. DSC (5°C/min) onset 159 °C, peak 164°C (372 J/g exotherm), nach Zusatz von 0,67 Gew.-% 25%-iger Kaliumacetatlösung in Diethylenglycol DSC (5°C/min) onset 161 °C, peak 172°C (703 J/g exotherm). Es ist bekannt, dass für dieses Molekül E/Z-Isomerie auftritt. $^1$H-NMR (DMSO, ppm): 2,75 s (1 H, Isomer 1), 3,08 (0,14 H, Isomer 2), 8,91 br (1,21 H, Isomer 1 und 2), 10,01 br (0,12 H, Isomer 2), 10,48 br (1,04 H, Isomer 1).

Es wird eine Verbindung mit der Struktur $H_2C(CO-NH-OH)_2$ erhalten.

Herstellung von A2.1-3

158,5 g Dimethylmalonat (1,2 mol) werden mit 0,34 dm$^3$ Methanol verdünnt. 177,6 g Hydroxylaminlösung (50 Gew.-% in Wasser, 2,68 mol) werden zugetropft. Es fällt ein weißer Feststoff aus, es wird mit weiteren 0,2 dm$^3$ Methanol verdünnt und 32 h gerührt. Nach Absaugen und Trocknen werden 142,6 g Ausbeute erhalten. DSC-onset 168 °C, peak 175°C (177,3 J/g exotherm). Es ist bekannt, dass für dieses Molekül E/Z-Isomerie auftritt. $^1$H-NMR (DMSO, ppm): 2,75 s (1 H, Isomer 1), 3,08 (0,13 H, Isomer 2), 8,91 br (1,19 H, Isomer 1 und 2), 10,02 br (0,13 H, Isomer 2), 10,47 br (1,06 H, Isomer 1). 13C-NMR (DMSO, ppm) 163,5 (1C), 163,7 (0,06 C), 170,3 (0,06 C), 38,3 (0,9 C), 37,3 (0,12 C).

Es wird eine Verbindung mit der Struktur $H_2C(CO-NH-OH)_2$ erhalten.

Herstellung von A2.2-1

81,6 g Isatosäureanhydrid (0,5 mol) werden mit 1,06 g Kaliumphosphat (0,005 mol) in 150 ml THF vorgelegt. 52,55 g 2-(2-Aminoethoxy)ethanol werden zugetropft.
Die Entwicklung von $CO_2$ endet nach 20 Minuten, Danach wird für 2,5 Stunden nachgerührt, filtriert und bei 80°C und 10 mbar alle flüchtigen Komponenten abgezogen. Es werden 102,5 g eines dunklen Öls erhalten. Die Aminzahl beträgt 269 mg KOH/g. Die OH-Zahl zeigt zwei Umschlagpunkte: sie liegt bei 245 +/-35 mg KOH/g. Die Daten entsprechen dem $^1$H-NMR, das 8% O-Acylierung zum Ester und 92% N-Acylierung zum Amid aufweist. $^1$H-NMR 7,35 dd (1,5, 7,9 Hz, 1H, C6-H), 7,17 ddd (9,7, 7,1, 1,5 Hz, 1H, C4-H), 6,65 dd(1 H, C3-H), 6,61 ddd (1 H, C5-H), 5,49 br. (2 H), 3,70 m (2 H), 3,52-3,63 m (6,4 H); Nebenkomponente Ester: 6,54 ddd (0,1 H, C5-H), 5,69 br (0,2 H), 3,65-3,68 (0,4 H), 3,45-3,52 (0,4 H).

Es wird eine Verbindung mit der Struktur $H_2N-C_6H_4-CO-NH-CH_2-CH_2-O-CH_2-CH_2-OH$ erhalten.

Herstellung von A2.2-2

81,6 g Isatosäureanhydrid (0,5 mol) werden mit 1,06 g Kaliumphosphat (0,005 mol) in 150 ml THF vorgelegt. 112,25 g amino-terminiertes Polypropylenglycol-400 (0,25mol) wird zugetropft. Die Entwicklung von $CO_2$ endet nach 20 Minuten, Danach wird für 2,5 Stunden nachgerührt, filtriert und bei 40°C und 10 mbar alle flüchtigen Komponenten abgezogen. Es werden 162,77 g eines dunklen Öls erhalten. Massenspektrum (Dithranol+LiCl) von m/z = 435 Da (3 PO) bis 1015 Da (13 PO), Maximum 667 Da (7 PO). $^1$H-NMR 7,28-7,43 m (2H), 7,18 dd (2H), 6,72-6,83 ppm br (0,4 H), 6,58-6,70 m (4 H), 6,37-6,53 br (0,8 H), 5,5 ppm br (3 H), 4,27 m (2 H), 3,1-3,8 ppm (22H), 1,26-1,30 m (6H), 1,04-1,16 ppm (18 H).

Es wird eine Verbindung mit der Struktur $H_2N-C_6H_4-CO-NH-[CH_2-CH_2-O]_n-CH_2-CH_2-NH-CO-C_6H_4-NH_2$ erhalten, wobei n im Mittel 6 ist.

Herstellung von Polyurethan-Schaumstoffen:

Zur Herstellung der Polyurethan-Schaumstoffe werden die notwendigen Mengen der Komponente A (Polyolmischung A, das entsprechende Additiv und gegebenenfalls Diethanolamin) in einem Pappbecher mit Blechboden (Volumen: ca. 850ml) vorgelegt und mit einem Rührwerk (Fa. Pendraulik) mit Standardrührscheibe (d = 64 mm) bei 4200 U/min 45 Sekunden lang mit Luft beladen.

**Tabelle 1: Polyolmischung A**

| Komponente | Einsatzmenge | Etherbindungen |
|---|---|---|
|  | Gew.-Tle. | mol/kg Mischung |
| A1.1-1 | 91,56 | 16,17 |
| A1.1-2 | 1,75 | 0,36 |
| A1.3-1 | 0,62 | 0,13 |
| A3.1-1 | 3,85 | - |
| A4-1 | 0,77 | 0,06 |
| A4-2 | 1,45 | - |

(fortgesetzt)

| Komponente | Einsatzmenge | Etherbindungen |
|---|---|---|
|  | Gew.-Tle. | mol/kg Mischung |
| **Polyolmischung A** | **100,00** | **16,72** |

Das Isocyanat B-1 wird in einen geeigneten Becher eingewogen und wieder entleert (Auslaufzeit: 3 s). Dieser, an den Innenwandungen noch benetzte Becher wird tariert und wieder mit der angegebenen Isocyanatmenge gefüllt. Das Isocyanat B-1 wird der Komponente A zugesetzt (Auslaufzeit: 3 s). Die erhaltene Mischung aus Isocyanat B-1 und den anderen Komponenten wird mit einem Rührwerk (Fa. Pendraulik) für 5 Sekunden intensiv vermischt. Ca. 93 Gramm des Reaktionsgemisches werden in eine 23°C warme mit Teflonfolie ausgekleidete Kastenform aus Aluminium mit 1,6 dm$^3$ Volumen gegossen. Die Form wird verschlossen und verriegelt. Nach sechs Minuten wird die Verriegelung geöffnet und entspannt.

Alle Polyurethan-Schaumstoffe wurden nach der Herstellung 7 Tage in einem Abzug bei 20-23°C aufbewahrt.

Mechanische Charakterisierung der Polyurethan-Schaumstoffe

Die Stauchhärte wurde parallel zur Aufschäumrichtung bei 40% Stauchung gemessen. Eine Vorkraft von 2 kPa wurde dabei eingestellt. Die Vorschubgeschwindigkeit betrug 50 mm/min. In Tabelle 2a und 2b sind die mechanischen Eigenschaften der Polyurethan-Schaumstoffe dargestellt. Der Einsatz der erfindungsgemäßen Komponente A2 führt zu Polyurethan-Schaumstoffen mit guten mechanischen Eigenschaften.

**Tabelle 2a: Mechanische Eigenschaften bei Kennzahl 90**

| | Einheit | 1* | 2* | 3* | 4 | 5 | 6 | 7 | 8 | 9 |
|---|---|---|---|---|---|---|---|---|---|---|
| Additiv | | Nullwert | V-1 | V-2 | A2.1-1 | A2.1-2 | A2.1-3 | A2.2-1 | A2.2-2 | A2.2-2 |
| Zusatz von Diethanolamin | Gew.-Tle. | 0 | 0 | 0 | 0,5 | 0 | 0,5 | 0,5 | 0 | 0 |
| Mischungsverhältnis Polyol: Isocyanat[1] | | 59 | 59 | 59 | 60 | 60 | 60 | 60 | 60 | 60 |
| Kennzahl | | 90 | 90 | 90 | 90 | 90 | 90 | 90 | 90 | 90 |
| Gehalt an Additiv | mmol/kg [2] | 0 | 31 | 31 | 31 | 31 | 31 | 31 | 31 | 278 |
| Kernrohdichte | kg/m$^3$ | 50,1 | 43,3 | 45,5 | 44,8 | 44,8 | 42,7 | 44,9 | 45,0 | 43,7 |
| Druckfestigkeit | kPa | 8,4 | 5,3 | 6,7 | 7,1 | 6,3 | 6,1 | Keine Daten | Keine Daten | Keine Daten |
| Druckfestigkeit quadratisch korrigiert auf 45,5 kg/m$^3$ | kPa | 6,9 | 5,9 | 6,7 | 7,3 | 6,5 | 6,9 | Keine Daten | Keine Daten | Keine Daten |
| Dämpfung | % | 42 | 32 | 33 | 31 | 33 | 33 | 33 | 30 | 31 |
| Druckverformungsrest 75%/22h/70°C | % | Keine Daten | 15 | 13 | Keine Daten | 16 | 15 | Keine Daten | Keine Daten | Keine Daten |
| Zugfestigkeit | MPa | Keine Daten | 0,12 | 0,14 | 0,17 | 0,14 | Keine Daten | 0,14 | 0,16 | 0,16 |
| Bruchdehnung | % | Keine Daten | 83 | 82 | 87 | 82 | Keine Daten | 79 | 85 | 74 |
| Luftdurchlässigkeit | Cfm | Keine Daten | 101 | 97 | 121 | 97 | 99 | 96 | 103 | 136 |

* Vergleichsversuch

[1] Gibt das Mischungsverhältnis der Gewichtssumme der Komponente A ("Polyol") zum Isocyanat B-1 ("Isocyanat" an, bezogen auf "Polyol" = 100 Gew.-Teile.

[2] Bezogen auf mmol des Additivs pro kg der Summe der Massen der Komponenten **A** und **B.**

EP 3 932 969 A1

**Tabelle 3b: Mechanische Eigenschaften bei Kennzahl 100**

|  | Einheit | **10*** | **11** |
|---|---|---|---|
| Additiv |  | Nullwert | A2.1-4 |
| Mischungsverhältnis Polyol: Isocyanat[1] |  | 65 , 6 | 65,6 |
| Kennzahl |  | 100 | 100 |
| Gehalt an Additiv | mmol/kg [2] | 0 | 1,2 |
| Kernrohdichte | $kg/m^3$ | 45,4 | 44,6 |
| Druckfestigkeit | kPa | 9,0 | 8,5 |
| Druckverformungs-rest 75%/22h/70°C | % | 13 | 9 |

* Vergleichsversuch
[1] Gibt das Mischungsverhältnis der Gewichtssumme der Komponente A ("Polyol") zum Isocyanat B-1 ("Isocyanat") an, bezogen auf "Polyol" = 100 Gew.-Teile
[2] Bezogen auf mmol des Additivs pro kg der Summe der Massen der Komponenten **A** und **B.**

Messung der Aldehyd-Emissionen

Bei der Messung der Aldehyd-Emissionen ist eine Reduktion aller gemessenen Aldehyde beim nichterfindungsgemäßen Beispiel 3 und den erfindungsgemäßen Beispielen 4 bis 9 gegenüber dem Nullwert ohne Additiv zu erkennen. Die Verwendung von Cyanacethydrazid (V-1) in Beispiel 2 führt zwar ebenfalls im Vergleich zum Nullwert zu einer Reduktion der Emission von drei der vier gemessenen Aldehyden, gleichzeitig steigt jedoch die Emission von Acetaldehyd deutlich an.

**Tabelle 4a: Aldehyd-Emissionen bei Kennzahl 90**

| | Einheit | 1* | 2* | 3* | 4 | 5 | 6 | 7 | 8 | 9 |
|---|---|---|---|---|---|---|---|---|---|---|
| Additiv | | Nullwert | V-1 | V-2 | A2.1-1 | A2.1-2 | A2.1-3 | A2.2-1 | A2.2-2 | A2.2-2 |
| Zusatz von Diethanolamin | Gew.-Tle. | 0 | 0 | 0 | 0,5 | 0 | 0,5 | 0,5 | 0 | 0 |
| Gehalt an Additiv | mmol/kg [2] | 0 | 31 | 31 | 31 | 31 | 31 | 31 | 31 | 278 |
| Formaldehyd | mg/kg | 7,0 | 2,9 | 0,9 | 0,9 | 0,8 | <0,3 | 0,9 | 1,2 | 3,7 |
| Acetaldehyd | mg/kg | 0,7 | 7,4 | <0,3 | <0,3 | <0,3 | <0,3 | <0,3 | <0,3 | 0,6 |
| Propionaldehyd | mg/kg | 0,4 | <0,1 | <0,1 | <0,3 | <0,1 | <0,1 | <0,3 | <0,3 | <0,3 |
| Acrolein | mg/kg | 1,0 | <0,3 | <0,1 | <0,3 | <0,1 | <0,1 | <0,3 | <0,3 | 0,8 |
| Summe der Aldehyde | mmol/kg | 0,27 | 0,26 | 0,03 | 0,03 | 0,03 | | 0,03 | 0,04 | 0,15 |
| Effizienz des Additivs | mmol Aldehyd/mol Additiv | - | 7,9 | 7,9 | 8,0 | 8,8 | 7,9 | 7,5 | 0,4 | 0,3 |

\* Vergleichsversuch
[2] Bezogen auf mmol des Additivs pro kg der Komponenten **A** und **B**.

Die Tabelle 3b zeigt, dass auch bei deutlich geringeren Anteilen eines erfindungsgemäßen Additivs der Anteil an Aldehyden eines Polyurethanschaumstoffes gegenüber eines Polyurethanschaumstoffes ohne Additiv reduziert wird.

**Tabelle 5b: Aldehyd-Emissionen bei Kennzahl 100**

|  | Einheit | 10* | 11 |
|---|---|---|---|
| Additiv |  | Nullwert | A2.1-4 |
| Gehalt an Additiv | mmol/kg | 0 | 1,2 |
| Formaldehyd | mg/kg | 4,3 | 3,6 |
| Acetaldehyd | mg/kg | 0,7 | 0,4 |
| Propanal | mg/kg | <0,3 | <0,3 |
| Acrolein | mg/kg | <0,3 | <0,3 |
| Summe der Aldehyde | mmol/kg | 0,16 | 0,13 |
| Effizienz des Additivs | mmol Aldehyd/mol Additiv |  | 26 |

Messung der leichtflüchtigen und kondensierbaren Substanzen (VDA 278)

Die Emission von leichtflüchtigen und kondensierbaren Substanzen (VOC und FOG) nach VDA 278 ist bei den erfindungsgemäßen Beispielen 5 bis 9 jeweils unter 80 mg/kg. Im Gegensatz dazu führt der Einsatz von Cyanacethydrazid (V-1) zu einer Emission nach VDA 278 von insgesamt 185 mg/kg und bei Cyanacetamid (V-2) zu einer Emission von 464 mg/kg. Der erfindungsgemäße Einsatz der Komponente **A2** führt somit nicht nur zu einer Reduktion der Aldehydemissionen, sondern auch zu einer geringeren Emission von flüchtigen organischen Verbindungen nach VDA 278 im Vergleich zu den Additiven aus dem Stand der Technik.

**Tabelle 6: Emission leichtflüchtiger und kondensierbarer Substanzen**

|  | Einheit | 2* | 3* | 5 | 6 | 7 | 8 | 9 |
|---|---|---|---|---|---|---|---|---|
| Additiv |  | V-1 | V-2 | A2.1-2 | A2.1-3 | A2.2-1 | A2.2-2 | A2.2-2 |
| Zusatz an Diethanolamin | Gew.-Tle. | 0 | 0 | 0 | 0,5 | 0,5 | 0 | 0 |
| Gehalt an Additiv | mmol/k$_g$ [2] | 31 | 31 | 31 | 31 | 31 | 31 | 278 |
| **TOTAL VOC + FOG**[2] | **mg/kg** | **228** | **464** | **67** | **78** | **51** | **47** | **68** |
| Siloxane (VOC + FOG) | mg/kg | 27 | 29 | 26 | 27 | 25 | 19 | 20 |
| Aliphatische Amine (VOC) | mg/kg | 15 | 15 | unter der Nachweisgrenze | | | | |
| Propylenglycolderivate (VOC+FOG) | mg/kg | 62 | 50 | 30 | 39 | 20 | 18 | 5 |
| Cyanacetamid (VOC) | mg/kg | 0 | 353 | 0 | 0 | 0 | 0 | 0 |
| Diphenylamine (FOG) | mg/kg | 2 | 2 | 2 | 3 | 0 | 1 | 1 |
| Acridine und Dihydroacridin (FOG) | mg/kg | 11 | 12 | 8 | 6 | 0 | 7 | 0 |
| Unbekannte (VOC) | mg/kg | 111 | 0 | 0 | 0 | 6 | 0 | 8 |

* Vergleichsversuch
[2] Bezogen auf mmol des Additivs pro kg der Komponenten **A** und **B.**
[3] VOC werden als Toluoläquivalent angegeben, FOG als Hexadecanäquivalent.

**Patentansprüche**

1.    Verfahren zur Herstellung von Polyurethanen, bevorzugt Polyurethanschaumstoffen, wobei die Komponente

**A** enthaltend

**EP 3 932 969 A1**

**A1** Verbindungen mit gegenüber Isocyanaten reaktionsfähigen Wasserstoffatomen,
**A2** mindestens eine der Komponenten **A2.1** oder **A2.2,** wobei

**A2.1** eine oder mehrere C-H-acide Verbindungen der Formel (Ia) enthält

$$Z^2\text{-C(O)-NH-OH} \qquad (Ia)$$

wobei

$Z^2$ für -CH$_2$-NO$_2$, -CH$_2$-CN, -CH$_2$-P(O)R$^2$R$^3$, -CH$_2$-S(O)R$^4$R$^5$, -CH$_2$-C(O)-OR$^6$, - CH$_2$-C(O)-NR$^7$R$^8$, -CH$_2$-NR$^9$-NR$^{10}$R$^{11}$, -CH$_2$-NR$^{12}$-OR$^{13}$, -CH$_2$-C(Y)R$^{14}$ oder einer substituierten Arylgruppe, bevorzugt mit einem NCO-reaktiven Substituenten, steht,
Y für =O oder =NOR$^{15}$ steht,
R$^2$ bis R$^7$ und R$^9$ bis R$^{15}$ jeweils unabhängig voneinander für H, eine substituierte oder unsubstituierte Alkylgruppe oder eine substituierte oder unsubstituierte Arylgruppe steht,
R$^8$ für **H,** eine substituierte oder unsubstituierte Alkylgruppe oder eine substituierte oder unsubstituierte Arylgruppe oder eine Hydroxylgruppe steht,

**A2.2** ein oder mehrere Anthranilamide gemäß Formel (II) und/oder (III) enthält,

$$H_2N\text{-Aryl-C(O)-NH-R}^a\text{-XH} \qquad (II)$$

$$H_2N\text{-Aryl-C(O)-NH-R}^b\text{-X-C(O)-Aryl-NH}_2 \qquad (III)$$

wobei R$^a$ und R$^b$ unabhängig voneinander für eine substituierte oder unsubstituierte Alkylkette, wie ein (Poly)alkylenoxid, stehen,
X für -O-, -N(H)- oder -S- steht,

gegebenenfalls
**A3** Treibmittel
und gegebenenfalls
**A4** Hilfs- und Zusatzstoffe wie

a) Katalysatoren,
b) oberflächenaktive Zusatzstoffe,
c) Pigmente und/oder Flammschutzmittel,

mit
**B** Di- und/oder Polyisocyanaten,
umgesetzt wird.

2. Verfahren gemäß Anspruch 1, wobei **A1** die Komponenten

**A1.1** gegenüber Isocyanaten reaktionsfähige Wasserstoffatome aufweisende Verbindungen mit einer NH-Zahl gemäß DIN 53176 in der Fassung von November 2002 und/oder OH-Zahl gemäß DIN 53240-1 in der Fassung von Juni 2013 von 15 bis < 120 mg KOH/g,
gegebenenfalls
**A1.2** gegenüber Isocyanaten reaktionsfähige Wasserstoffatome aufweisende Verbindungen mit einer NH-Zahl gemäß DIN 53176 in der Fassung von November 2002 und/oder OH-Zahl gemäß DIN 53240-1 in der Fassung von Juni 2013 von 120 bis 600 mg KOH/g,
und gegebenenfalls
**A1.3** gegenüber Isocyanaten reaktionsfähigen Wasserstoffatomen aufweisenden Verbindungen mit einer NH-Zahl gemäß DIN 53176 in der Fassung von November 2002 und/oder OH-Zahl gemäß DIN 53240-1 in der Fassung von Juni 2013 von 600 bis 4000 mg KOH/g,
enthält.

3. Verfahren gemäß Anspruch 1 oder 2, wobei die Einsatzmenge der Komponente **A2** 1 bis 200 mmol pro kg der

19

Komponenten **A** und **B,** bevorzugt 5 bis 50 mmol pro kg der Komponenten **A** und **B** beträgt.

4. Verfahren zur Herstellung von Polyurethanen, bevorzugt Polyurethan-Schaumstoffen, wobei die Komponente

    **A** enthaltend

        **A1** Verbindungen mit gegenüber Isocyanaten reaktionsfähigen Wasserstoffatomen, enthaltend

            **A1.1** 75 bis 99,0 Gew.-Teile (bezogen auf **A** = 100 Gew.-Teile) gegenüber Isocyanaten reaktionsfähigen Wasserstoffatomen aufweisenden Verbindungen mit einer OH-Zahl gemäß DIN 53240-1 in der Fassung von Juni 2013 von 15 bis < 260 mg KOH/g,
            **A1.2** 0 bis 10 Gew.-Teile (bezogen auf **A** = 100 Gew.-Teile) gegenüber Isocyanaten reaktionsfähigen Wasserstoffatomen aufweisenden Verbindungen mit einer OH-Zahl gemäß DIN 53240-1 in der Fassung von Juni 2013 von 260 bis 4000 mg KOH/g,

        **A2** 1 bis 200 mmol pro kg der Komponenten **A** und **B,** bevorzugt 5 bis 50 mmol pro kg der Komponenten **A** und **B,** mindestens einer Komponente **A2.1** oder **A2.2,** wobei

            **A2.1** eine oder mehrere C-H-acide Verbindungen der Formel (Ia) enthält

$$Z^2\text{-C(O)-NH-OH} \qquad \text{(Ia)}$$

        wobei

            $Z^2$ für $-CH_2-NO_2$, $-CH_2-CN$, $-CH_2-P(O)R^2R^3$, $-CH_2-S(O)R^4R^5$, $-CH_2-C(O)-OR^6$, $-CH_2-C(O)-NR^7R^8$, $-CH_2-NR^9-NR^{10}R^{11}$, $-CH_2-NR^{12}-OR^{13}$, $-CH_2-C(Y)R^{14}$ oder für eine substituierte Arylgruppe, bevorzugt mit einem NCO-reaktiven Substituenten, steht,
Y für =O oder =$NOR^{15}$ steht,
$R^2$ bis $R^7$ und $R^9$ bis $R^{15}$ jeweils unabhängig voneinander für H, eine substituierte oder unsubstituierte Alkylgruppe oder eine substituierte oder unsubstituierte Arylgruppe steht,
$R^8$ für H, eine substituierte oder unsubstituierte Alkylgruppe oder eine substituierte oder unsubstituierte Arylgruppe oder eine Hydroxylgruppe steht,

            **A2.2** ein oder mehrere Anthranilamide gemäß Formel (II) und/oder (III) enthält,

$$H_2N\text{-Aryl-C(O)-NH-}R^a\text{-XH} \qquad \text{(II)}$$

$$H_2N\text{-Aryl-C(O)-NH-}R^b\text{-X-C(O)-Aryl-}NH_2 \qquad \text{(III)}$$

            wobei $R^a$ und $R^b$ unabhängig voneinander für eine substituierte oder unsubstituierte Alkylkette, wie ein (Poly)alkylenoxid, stehen,
X für -O-, -N(H)- oder -S- steht,

        **A3** 0,5 bis 24,5 Gew.-Teile (bezogen auf **A** = 100 Gew.-Teile) Treibmittel
und
        **A4** 0,5 bis 10 Gew.-Teile (bezogen auf **A** = 100 Gew.-Teile) Hilfs- und Zusatzstoffe wie

            a) Katalysatoren,
            b) oberflächenaktive Zusatzstoffe,
            c) Pigmente und/oder Flammschutzmittel,

    mit
    **B** Di- und/oder Polyisocyanaten,
umgesetzt wird.

5. Verwendung von Komponente **A2.1** und/oder **A2.2** in Polyurethanzusammensetzungen oder in Verfahren zur Herstellung von Polyurethanen, bevorzugt Polyurethanschaumstoffen, zur Erniedrigung von Aldehydemissionen und/oder Emissionen flüchtiger organischer Verbindungen der daraus resultierenden Polyurethane, bevorzugt Polyurethanschaumstoff, wobei

A2.1 eine oder mehrere C-H-acide Verbindungen der Formel (Ia) enthält

$$Z^2\text{-C(O)-NH-OH} \qquad \text{(Ia)}$$

wobei

$Z^2$ für -CH$_2$-NO$_2$, -CH$_2$-CN, -CH$_2$-P(O)R$^2$R$^3$, -CH$_2$-S(O)R$^4$R$^5$, -CH$_2$-C(O)-OR$^6$, -CH$_2$-C(O)-NR$^7$R$^8$, CH$_2$-NR$^9$-NR$^{10}$R$^{11}$, -CH$_2$-NR$^{12}$-OR$^{13}$, -CH$_2$-C(Y)R$^{14}$ oder einer substituierten Arylgruppe steht,
Y für =O oder =NOR$^{15}$ steht,
R$^2$ bis R$^7$ und R$^9$ bis R$^{15}$ jeweils unabhängig voneinander für H, eine substituierte oder unsubstituierte Alkylgruppe oder eine substituierte oder unsubstituierte Arylgruppe steht,
R$^8$ für H, eine substituierte oder unsubstituierte Alkylgruppe oder eine substituierte oder unsubstituierte Arylgruppe oder eine Hydroxylgruppe steht,

A2.2 ein oder mehrere Anthranilamide gemäß Formel (II) und/oder (III) enthält,

$$H_2N\text{-Aryl-C(O)-NH-R}^a\text{-XH} \qquad \text{(II)}$$

$$H_2N\text{-Aryl-C(O)-NH-R}^b\text{-X-C(O)-Aryl-NH}_2 \qquad \text{(III)}$$

wobei R$^a$ und R$^b$ unabhängig voneinander für eine substituierte oder unsubstituierte Alkylkette, wie ein (Poly)alkylenoxid, stehen,
X für -O-, -N(H)- oder -S- steht,

6. Verfahren oder Verwendung gemäß einem der Ansprüche 1 bis 5, wobei in der Formel (Ia) Z$^2$ für -CH$_2$-CN, -CH$_2$-C(Y)R$^{14}$, CH$_2$-C(O)-NR$^7$R$^8$ oder einer mit OH-substituierten Arylgruppe steht.

7. Verfahren oder Verwendung gemäß einem der Ansprüche 1 bis 6, wobei in der Formel (Ia) R$^2$ bis R$^7$ und R$^9$ bis R$^{15}$ unabhängig voneinander für H oder eine substituierte oder unsubstituierte Alkylgruppe stehen und R$^8$ für H oder eine substituierte oder unsubstituierte Alkylgruppe oder eine Hydroxygruppe steht.

8. Verfahren gemäß einem der Ansprüche 1 bis 4, 6 oder 7, wobei als gegenüber Isocyanaten reaktionsfähige Wasserstoffatome aufweisenden Verbindungen (Komponente A1) mindestens zwei Hydroxylgruppen aufweisenden Polyether, gegebenenfalls in Mischung mit mindestens zwei Hydroxylgruppen aufweisenden Polyestern eingesetzt werden.

9. Verfahren gemäß einem der Ansprüche 1 bis 4 oder 6 bis 8, wobei als Di- und/oder Polyisocyanat-Komponente (Komponente B) eine Diphenylmethandiisocyanat-Mischung, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

10. Verfahren gemäß einem der Ansprüche 1 bis 4 oder 6 bis 9, wobei Komponente A1 mindestens eine der Verbindungen Ethanolamin oder Diethanolamin enthält.

11. Polyurethane, bevorzugt Polyurethanschaumstoffe, erhältlich nach einem Verfahren gemäß einem der Ansprüche 1 bis 4 oder 6 bis 10.

12. Polyurethane, bevorzugt Polyurethanschaumstoffe, gemäß Anspruch 12 mit einer Rohdichte von 4 bis 600 kg/m$^3$ (Polyurethanweichschaumstoff bzw. Halbhartschaumschaumstoff), bevorzugt 60 bis 120 kg/m$^3$ (Polyurethanweich-

schaumstoff), bzw. bevorzugt 15 bis 55 kg/m$^3$ (Halbhartschaumschaumstoff).

13. Verwendung der Polyurethane, bevorzugt Polyurethanschaumstoffe, gemäß Anspruch 11 oder 12 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

14. Mischungen enthaltend

A1 Verbindungen mit gegenüber Isocyanaten reaktionsfähigen Wasserstoffatomen und
A2 mindestens eine der Komponenten **A2.1** oder **A2.2,** wobei

**A2.1** eine oder mehrere C-H-acide Verbindungen der Formel (Ia) enthält

$$Z^2\text{-C(O)-NH-OH} \qquad \text{(Ia)}$$

wobei

$Z^2$ für $-CH_2-NO_2$, $-CH_2-CN$, $-CH_2-P(O)R^2R^3$, $-CH_2-S(O)R^4R^5$, $-CH_2-C(O)-OR^6$, $-CH_2-C(O)-NR^7R^8$, $CH_2-NR^9-NR^{10}R^{11}$, $-CH_2-NR^{12}-OR^{13}$, $-CH_2-C(Y)R^{14}$ oder einer substituierten Arylgruppe steht,
$Y$ für $=O$ oder $=NOR^{15}$ steht,
$R^2$ bis $R^7$ und $R^9$ bis $R^{15}$ jeweils unabhängig voneinander für H, eine substituierte oder unsubstituierte Alkylgruppe oder eine substituierte oder unsubstituierte Arylgruppe steht,
$R^8$ für H, eine substituierte oder unsubstituierte Alkylgruppe oder eine substituierte oder unsubstituierte Arylgruppe oder eine Hydroxylgruppe steht,

**A2.2** ein oder mehrere Anthranilamide gemäß Formel (II) und/oder (III) enthält,

$$H_2N\text{-Aryl-C(O)-NH-}R^a\text{-XH} \qquad \text{(II)}$$

$$H_2N\text{-Aryl-C(O)-NH-}R^b\text{-X-C(O)-Aryl-}NH_2 \qquad \text{(III)}$$

wobei $R^a$ und $R^b$ unabhängig voneinander für eine substituierte oder unsubstituierte Alkylkette, wie ein (Poly)alkylenoxid, stehen,
$X$ für $-O-$, $-N(H)-$ oder $-S-$ steht,

15. Mischung gemäß Anspruch 14, wobei in der Formel (Ia) Z für $-CH_2-CN$, $-CH_2-C(Y)R^{14}$, $CH_2-C(O)-NR^7R^8$ oder einer mit OH-substituierten Arylgruppe steht.

Europäisches Patentamt

European Patent Office

Office européen des brevets

**EUROPÄISCHER RECHERCHENBERICHT**

Nummer der Anmeldung

EP 21 17 6797

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2019/170590 A1 (COVESTRO DEUTSCHLAND AG [DE]) 12. September 2019 (2019-09-12) * Seite 20, Zeile 1 - Seite 21, Zeile 11; Ansprüche 1-15 * ----- | 1-4,6-15 | INV. C08G18/76 C08G18/48 C08G18/16 C08K5/315 C08L75/08 C08K5/25 |
| X,D | WO 2018/114820 A1 (COVESTRO DEUTSCHLAND AG [DE]) 28. Juni 2018 (2018-06-28) * Seite 1, Zeile 21 - Zeile 24; Ansprüche 1-15 * ----- | 1-15 | |
| A | WO 2015/082316 A1 (BASF SE [DE]) 11. Juni 2015 (2015-06-11) * Seite 11, Zeile 1 - Seite 12, Zeile 20; Ansprüche 1-12 * ----- | 1-15 | |
| A | WO 2017/207687 A1 (BASF SE [DE]) 7. Dezember 2017 (2017-12-07) * Seite 12, Zeile 20 - Seite 15, Zeile 5; Ansprüche 1-14 * ----- | 1-15 | RECHERCHIERTE SACHGEBIETE (IPC) |
| A | US 2017/218157 A1 (LEE SUNG-HOON [KR] ET AL) 3. August 2017 (2017-08-03) * Absatz [0036]; Ansprüche 1-8 * ----- | 1-15 | C08G C08K C08L |

Der vorliegende Recherchenbericht wurde für alle Patentansprüche erstellt

| Recherchenort | Abschlußdatum der Recherche | Prüfer |
|---|---|---|
| München | 26. November 2021 | Scheuer, Sylvie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 6797

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-11-2021

| Im Recherchenbericht angeführtes Patentdokument | Datum der Veröffentlichung | Mitglied(er) der Patentfamilie | Datum der Veröffentlichung |
|---|---|---|---|
| WO 2019170590 A1 | 12-09-2019 | CN 111936542 A | 13-11-2020 |
| | | EP 3762441 A1 | 13-01-2021 |
| | | US 2020399466 A1 | 24-12-2020 |
| | | WO 2019170590 A1 | 12-09-2019 |
| WO 2018114820 A1 | 28-06-2018 | CN 110062782 A | 26-07-2019 |
| | | EP 3336115 A1 | 20-06-2018 |
| | | EP 3555166 A1 | 23-10-2019 |
| | | JP 2020504199 A | 06-02-2020 |
| | | US 2019359761 A1 | 28-11-2019 |
| | | WO 2018114820 A1 | 28-06-2018 |
| WO 2015082316 A1 | 11-06-2015 | BR 112016012299 A8 | 05-05-2020 |
| | | CN 105764946 A | 13-07-2016 |
| | | EP 3077436 A1 | 12-10-2016 |
| | | JP 6735669 B2 | 05-08-2020 |
| | | JP 2017502111 A | 19-01-2017 |
| | | KR 20160098299 A | 18-08-2016 |
| | | US 2016304686 A1 | 20-10-2016 |
| | | WO 2015082316 A1 | 11-06-2015 |
| WO 2017207687 A1 | 07-12-2017 | BR 112018074936 A2 | 12-03-2019 |
| | | CA 3026167 A1 | 07-12-2017 |
| | | CN 109196011 A | 11-01-2019 |
| | | EP 3464404 A1 | 10-04-2019 |
| | | JP 6957526 B2 | 02-11-2021 |
| | | JP 2019517615 A | 24-06-2019 |
| | | KR 20190015750 A | 14-02-2019 |
| | | US 2019119460 A1 | 25-04-2019 |
| | | WO 2017207687 A1 | 07-12-2017 |
| US 2017218157 A1 | 03-08-2017 | CN 107022054 A | 08-08-2017 |
| | | DE 102016213250 A1 | 03-08-2017 |
| | | KR 20170090763 A | 08-08-2017 |
| | | US 2017218157 A1 | 03-08-2017 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018114820 A1
- WO 2017207687 A1
- EP 2138520 A1
- WO 2015082316 A1
- WO 2017134296 A1